(19) **Europäisches Patentamt / European Patent Office / Office européen des brevets**

(11) **EP 3 014 779 B1**

(12) **FASCICULE DE BREVET EUROPEEN**

(45) Date de publication et mention
de la délivrance du brevet:
**12.08.2020 Bulletin 2020/33**

(21) Numéro de dépôt: **14739887.9**

(22) Date de dépôt: **23.06.2014**

(51) Int Cl.:
*H04B 3/46* *(2015.01)*   *H01R 39/58* *(2006.01)*
*H04B 3/60* *(2006.01)*   *H04B 17/00* *(2015.01)*
*G01D 5/165* *(2006.01)*

(86) Numéro de dépôt international:
**PCT/FR2014/051554**

(87) Numéro de publication internationale:
**WO 2014/207357 (31.12.2014 Gazette 2014/53)**

(54) **SURVEILLANCE DE LA QUALITE D'UN CANAL DE COMMUNICATION SUPPORTE PAR UN CONTACT GLISSANT**

ÜBERWACHUNG DER QUALITÄT EINES DURCH EINEN GLEITKONTAKT GESTÜTZTEN KOMMUNIKATIONSKANALS

MONITORING THE QUALITY OF A COMMUNICATION CHANNEL SUPPORTED BY A SLIDING CONTACT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2013 FR 1356216**

(43) Date de publication de la demande:
**04.05.2016 Bulletin 2016/18**

(73) Titulaires:
• **Université de Picardie Jules Verne**
  **80025 Amiens Cedex 1 (FR)**
• **Mersen France Amiens SAS**
  **80080 Amiens (FR)**

(72) Inventeurs:
• **BOURNY, Valéry**
  **F-80000 Amiens (FR)**
• **FORTIN, Jérôme**
  **F-02100 Saint-Quentin (FR)**
• **CAPITAINE, Thierry**
  **F-02690 Essigny-le-Grand (FR)**
• **LORTHOIS, Aurélien**
  **F-02110 Beaurevoir (FR)**
• **DA ROS, Véronique**
  **F-57220 Boulay (FR)**

(74) Mandataire: **Fédit-Loriot**
  **38, avenue Hoche**
  **75008 Paris (FR)**

(56) Documents cités:
**WO-A1-02/091003      FR-A1- 2 751 416**
**US-A1- 2011 309 943**

**Description**

L'invention concerne la surveillance de la qualité d'un canal de communication supporté par un contact glissant. Il est connu de transmettre des signaux électriques entre deux éléments mobiles l'un par rapport à l'autre. De tels dispositifs de transmission de données sur un contact glissant sont mis en œuvre dans divers domaines.

Un dispositif de transmission peut par exemple comprendre une ou plusieurs bagues collectrices et un ou plusieurs éléments de contact respectifs, que nous désignerons dans la suite par le terme « frotteur » : par exemple des balais, des fils, des fibres ou autre, disposés de façon à venir frotter contre la ou les bagues collectrices.

Un canal de communication implique plusieurs couches, dont une couche physique, chargée de la transmission effective de signaux ici électriques, ici sur un contact glissant, et d'autres couches de plus haut niveau. A ces couches de plus haut niveau, dites protocolaires dans la présente demande, correspondent divers paramètres de protocole, notamment des paramètres relatifs à un débit, à une modulation, à un code correcteur d'erreurs, une structure de trames, à des règles de communication (par exemple prévoir l'émission d'une trame pour accuser réception et un nouvel envoi en cas de non-réception de la trame d'accusé de réception après un lapse de temps donné), etc.

L'invention peut ainsi trouver de nombreuses applications par exemple dans l'imagerie médicale, les systèmes de grue, les manèges, les hélicoptères, ou l'éolien.

En particulier l'invention pourra trouver une application dans les systèmes de transmission de signaux ou STS (de l'anglais « Signal Transfer System »). Ces systèmes STS sont des systèmes électromécaniques dont la fonction est de transmettre au sein d'une machine industrielle, par l'intermédiaire d'un contact glissant, du courant électrique de puissance et des signaux électriques, cette dernière transmission étant effectuée selon un protocole de communication.

Ainsi, dans le cas d'une éolienne, un dispositif de baguier (« Slip Ring » en anglais) permet de transférer des données, notamment entre des capteurs installés sur une partie mobile de la nacelle, par exemple le nez de la nacelle de l'éolienne, et un processeur dans la nacelle ou au sol. Par exemple, des données de mesures issues de capteurs, par exemple des valeurs d'orientation de pâles, de leur vibration, ou autre, peuvent être transmises via ce système STS, vers le processeur, et inversement des données de commande issues du processeur, par exemple des messages pour imposer une rotation des pâles, ou autre, peuvent également être transférées via le système STS.

Malheureusement, la qualité d'un canal de communication mettant en œuvre un contact glissant est susceptible de se dégrader. Cette dégradation est vraisemblablement liée à plusieurs paramètres, notamment la température, l'humidité, la présence de poussières, les vibrations subies, les éventuelles surtensions, etc.

Il est connu de régulièrement vérifier et si besoin améliorer l'état des lubrifications du contact glissant afin d'améliorer la qualité des transmissions. Néanmoins de telles opérations de maintenance impliquant un démontage peuvent être relativement complexes et longues à effectuer, en particulier lorsqu'elles impliquent une intervention à un emplacement relativement difficile d'accès comme peut l'être une nacelle d'éolienne.

Il est en outre connu de détecter l'usure d'un contact glissant à partir de mesures électriques. Le document FR 96 08944 décrit ainsi une mesure de tension et d'intensité de part et d'autre d'un contact glissant. On en déduit une valeur de résistance que l'on compare à un seuil. Si cette valeur de résistance est supérieure au seuil attendu, il est considéré que le contact glissant est usé, et le contact est remplacé.

Le document US 2011/0309943 décrit un procédé impliquant une surveillance des signaux utiles reçus sur l'un des éléments mobiles et une analyse statistique de ces signaux.

Il reste toutefois relativement difficile d'estimer si un protocole de communication de données peut être supporté par un contact glissant dans son état courant.

Il existe donc un besoin pour une estimation plus fine de la qualité d'un canal de communication mettant en œuvre un dispositif de transmission de signaux entre deux éléments mobiles l'un par rapport à l'autre.

Il est proposé un procédé de surveillance de la qualité d'un canal de communication supporté par un dispositif de transmission de signaux électriques entre deux éléments mobiles l'un par rapport à l'autre formant un contact glissant, le procédé comprenant :

-    commander l'application d'un signal électrique continu à l'un des éléments du dispositif de transmission,
-    recevoir une pluralité de valeurs de signaux électriques mesurées sur l'autre des éléments du dispositif de transmission,
-    estimer à partir de ladite pluralité de valeurs mesurées une valeur de paramètre de variance,
-    comparer la valeur de paramètre de variance à un seuil,
-    en fonction du résultat de la comparaison, générer un signal représentatif de la qualité du canal de communication.

De façon surprenante, il s'est effectivement avéré qu'à partir de valeurs de mesures obtenues suite à l'injection d'un signal électrique continu sur un des éléments d'un contact glissant, on peut estimer une valeur d'un paramètre de variance qui est en soi suffisamment pertinente pour permettre de prendre une décision quant à savoir si tel ou tel protocole de communication pourra être supporté ou non par ce contact glissant.

Le signal appliqué étant continu, c'est-à-dire d'amplitude constante dans le temps au moins pendant un laps de temps donné, par exemple 100 ms, un seconde ou davantage, le procédé peut être relativement simple à appliquer. Le laps de temps pendant lequel le signal continu est appliqué peut avoir une durée fonction de l'application. Dans le cas d'un contact glissant rotatif, le laps de temps peut être supérieur ou égal à une période de rotation du contact glissant, avantageusement supérieur ou égal à 5 ou 10 périodes, par exemple de l'ordre d'une centaine de périodes.

L'invention n'est en rien limitée par la nature exacte du paramètre de variance. Il pourra par exemple s'agir de la variance elle-même, de l'écart-type, de la variance divisée par la moyenne de tension mesurée, ou autre.

Avantageusement et de façon non limitative, le seuil peut être choisi en fonction d'au moins un paramètre de protocole du canal de communication, par exemple en fonction du débit attendu, d'un paramètre de robustesse, d'un identifiant des règles de communication, et/ou autre.

On pourra par exemple prévoir une phase préalable de détermination de seuils, au cours de laquelle un analyseur émet des trames de données, conformément à un protocole donné. On applique un signal électrique continu à l'un des éléments du dispositif de transmission. On mesure une pluralité de valeurs de signal électrique sur l'autre de ces éléments, et on estime une valeur de paramètre de variance. Ainsi, en recueillant par ailleurs les données émises et reçues via ce dispositif de transmission, on peut associer un nombre de trames perdues à chaque valeur de paramètre de variance estimée, et donc établir une correspondance entre le paramètre de variance et la perte de trames.

La perte de trame est liée au protocole en ce sens qu'elle dépend de nombreux paramètres de ce protocole, notamment le débit de données, la ou les fréquences porteuses, la robustesse des codes correcteurs d'erreur, les règles de communication, etc. Une trame sera en effet considérée comme perdue si elle n'est globalement pas reçue ou si les données de la trame reçue sont trop erronées pour que l'information utile puisse être récupérée.

Cette phase préalable peut être effectuée pour chaque modèle de dispositif de transmission de signaux électriques, ou bien encore pour chaque dispositif de transmission de signaux électriques.

Cette phase d'étalonnage peut permettre d'établir une correspondance entre le transfert des trames des protocoles et le bruit de tension. On peut ainsi choisir le seuil comme correspondant par exemple à un pourcentage de pertes de trames donné, par exemple 5 ou 10 %.

On pourra prévoir, au cours de cette phase préalable, d'utiliser le dispositif de transmission de signaux électriques, en appliquant entre les éléments mobiles une vitesse proche de la ou les vitesses attendues en fonctionnement normal. Par exemple, dans le cas d'un baguier, on pourra prévoir une vitesse de rotation de 20 tours par minute.

Dans un mode de réalisation, le seuil peut être choisi en fonction en outre de la vitesse relative des éléments mobiles l'un par rapport à l'autre. Par exemple, en phase d'étalonnage, on pourra déterminer une pluralité de seuils, chaque seuil de cette pluralité correspondant à une vitesse ou à une plage de vitesses donnée. Il a en effet été observé que la variance augmentait avec la vitesse de rotation.

Avantageusement et de façon non limitative, le procédé peut comprendre en outre :

- estimer à partir de la pluralité de valeurs mesurées, et avantageusement à partir de la valeur de paramètre de variance, au moins une valeur de paramètre d'entropie, et, estimer une valeur de paramètre d'état de surface du contact en fonction de cette au moins une valeur de paramètre d'entropie.

En estimant ainsi la quantité d'information que l'on peut obtenir après l'application d'un signal électrique continu, on peut en effet évaluer l'état de surface du contact entre les éléments mobiles. En effet, si l'incertitude quant aux valeurs mesurées sur l'un des éléments après l'injection d'un signal électrique continu sur l'autre de ces éléments est relativement élevée, on peut présumer que l'état de surface est relativement irrégulier.

L'invention n'est en rien limitée par la nature exacte du paramètre d'entropie. On pourra par exemple utiliser la formule de Shannon, la formule de Rényi, ou autre, et le paramètre d'entropie peut être aussi bien une valeur d'entropie qu'une valeur obtenue à partir de la valeur d'entropie, par exemple une racine carrée de cette valeur d'entropie ou autre.

Cette estimation de l'état de surface peut être effectuée indépendamment de l'estimation de la qualité du canal. Il est ainsi proposé un procédé de surveillance de la qualité d'un état de surface d'un dispositif de transmission de signaux électriques entre deux éléments mobiles l'un par rapport à l'autre formant un contact glissant, le procédé comprenant :

- commander l'application d'un signal électrique continu à l'un des éléments du dispositif de transmission,
- recevoir une pluralité de valeurs de signaux électriques mesurées sur l'autre des éléments du dispositif de transmission,
- estimer à partir de ladite pluralité de valeurs mesurées une valeur de paramètre d'entropie,
- estimer une valeur de paramètre d'état de surface du contact en fonction de cette valeur de paramètre d'entropie.

Avantageusement et de façon non limitative, à chaque valeur de signal électrique sur l'autre des éléments du dispositif de transmission, est associée une valeur d'instant de réception.

Avantageusement et de façon non limitative, le procédé peut comprendre en outre une étape d'analyse de la pluralité de valeurs de signaux électriques reçus dans le domaine fréquentiel. Le procédé peut ainsi comprendre une étape de décomposition dans le domaine fréquentiel des valeurs reçues.

Avantageusement et de façon non limitative, le procédé peut comprendre une étape consistant à déterminer au moins une valeur de paramètre d'amplitude d'harmonique correspondant à au moins une fréquence d'harmonique respective. La valeur de paramètre d'amplitude peut être normalisée. On peut estimer un état du dispositif de transmission en fonction de cette valeur de paramètre d'amplitude d'harmonique.

Le procédé peut comprendre par exemple une étape de comparaison de cette valeur d'amplitude à un seuil d'amplitude prédéterminé. Il s'est en effet avéré que lorsqu'un contact glissant est relativement usé, les valeurs d'amplitude d'harmoniques peuvent être relativement plus élevées que lorsque le contact est neuf et lubrifié. Il est ainsi proposé de détecter l'état du contact en se basant sur ce paramètre d'amplitude d'harmonique.

Ce seuil d'amplitude peut par exemple avoir été déterminé lors d'une phase préalable, sur chaque dispositif de transmission ou bien une seule fois pour ce modèle de dispositif de transmission.

Avantageusement, on pourra prévoir de déterminer une pluralité de valeurs d'amplitude d'harmonique, en particulier une valeur d'amplitude pour l'harmonique de premier rang, c'est-à-dire pour la fréquence fondamentale, et une ou plusieurs valeurs d'harmonique pour les harmoniques de rangs supérieurs à 1, puis de comparer ces valeurs entre elles afin de détecter des éventuels défauts du dispositif de transmission.

En effet, le dispositif de transmission est amené à vibrer de par sa rotation. Cette vibration correspond à la fréquence fondamentale. Selon la façon dont la conception, la fabrication, l'installation ou autre du contact glissant ont été effectuées, le dispositif de transmission peut présenter des défauts, de type balourds, faux ronds, ou autre. En cas de défaut, des vibrations supplémentaires peuvent être subies par le contact glissant. Ces vibrations supplémentaires peuvent avoir une influence sur cette au moins une valeur d'amplitude d'harmonique.

Lorsque le dispositif de transmission présente des défauts mécaniques entraînant des vibrations non désirées, les amplitudes absolues et relatives des harmoniques de la fréquence principale de rotation peuvent augmenter de façon relativement significative.

Cette analyse basée sur les valeurs absolues ou relatives des amplitudes d'harmonique peut en particulier être effectuée lors de l'installation du dispositif de transmission, ou bien lors d'une opération de maintenance, afin de s'assurer que le dispositif est correctement installé.

Avantageusement et de façon non limitative, on pourra prévoir d'estimer une valeur d'un paramètre de densité spectrale de puissance, par exemple en prenant le carré du module de la transformée en fréquence divisé par le temps d'intégration, ou autre.

Le procédé peut comprendre une étape consistant à comparer cette valeur de paramètre de densité spectrale de puissance à un seuil de densité spectrale de puissance. Il s'est en effet avéré que la densité spectrale de puissance moyenne du bruit de tension peut augmenter considérablement lorsque le contact se dégrade.

L'invention n'est en rien limitée par le type de décomposition mis en œuvre lors de l'analyse fréquentielle. On pourra par exemple effectuer, transformer de Fourier rapide (de l'anglais « Fast Fourier Transform »), ou autre.

Cette analyse fréquentielle peut être effectuée indépendamment de l'estimation de la qualité du canal à partir du paramètre de variance. Il est ainsi proposé un procédé d'estimation d'un état d'un dispositif de transmission de signaux électriques entre deux éléments mobiles l'un par rapport à l'autre formant un contact glissant, le procédé comprenant :

- commander l'application d'un signal électrique continu à l'un des éléments du dispositif de transmission,
- recevoir une pluralité de valeurs de signaux électriques mesurées sur l'autre des éléments du dispositif de transmission, chaque valeur de ladite pluralité étant associée une valeur d'instant de réception,

- analyser la pluralité de valeurs de signaux électriques reçus dans le domaine fréquentiel,
- estimer un état du dispositif de transmission en fonction des résultats de cette analyse.

L'invention n'est en rien limitée par le type de dispositif de transmission mis en œuvre. On pourra par exemple prévoir un joint tournant, un baguier ou autre. Le contact peut être ponctuel, linéique ou surfacique. Dans le cas du baguier, on peut par exemple intégrer un système de bague fil, un système de bague balai ou autre.

L'invention peut trouver un certain nombre d'applications. On pourra par exemple citer les manèges, les grues, les systèmes de traitement des eaux usées, les machines industrielles d'emballage, d'imprimerie, les scanners médicaux, les hélicoptères, les éoliennes ou autre.

L'invention n'est pas non plus limitée par le protocole de communication testé. On pourra par exemple citer RS232, RS 422, RS485, RS422, Bus CAN (de l'anglais « Contrôler Area Network »), Ethernet, ProfiBus (de l'anglais « Processs Field Bus »), Modbus, Interbus.

A un protocole donné, est associé un nombre défini de voies, par exemple trois voies pour le protocole RS232, deux ou quatre voies pour le protocole RS485, deux voies pour le BusScan, et cinq voies pour l'Ethernet. En conséquence, le dispositif de transmission de signaux peut comprendre plusieurs contacts glissants, par exemple plusieurs bagues.

Le procédé décrit ci-dessus peut être mis en œuvre par des moyens de traitement numérique, par exemple un processeur.

Il est en outre proposé un produit programme d'ordinateur comprenant les instructions pour effectuer les étapes du procédé décrit ci-dessus lorsque ces instructions sont exécutées par un processeur. Ce programme stocké sur un support mémoire, par exemple un disque dur ou autre, téléchargé d'un réseau de télécommunication de type Internet, ou autre.

Il est en outre proposé un dispositif de surveillance de la qualité d'un canal de communication supporté par un dispositif de transmission de signaux électriques entre deux éléments mobiles l'un par rapport à l'autre formant un contact glissant, le dispositif comprenant :

- des moyens de transmission pour commander l'application d'un signal électrique continu à l'un des éléments du dispositif de transmission,
- des moyens de réception pour recevoir une pluralité de valeurs de signaux électriques mesurées sur l'autre des éléments du dispositif de transmission,
- des moyens de traitement agencés pour estimer à partir de ladite pluralité de valeurs mesurées une valeur de paramètre de variance, pour comparer la valeur de paramètre de variance à un seuil, et pour générer en fonction du résultat de la comparaison un signal représentatif de la qualité du canal de communication.

Ce dispositif peut par exemple être intégré dans ou comprendre un ou plusieurs processeurs, par exemple un microcontrôleur, un micro processeur, un DSP (de l'anglais « Digital Signal Processor »), ou autre.

Les moyens de transmission peuvent par exemple comprendre une broche de sortie, un port de sortie ou autre. Les moyens de réception peuvent par exemple comprendre une broche d'entrée, un port d'entrée ou autre. Les moyens de traitement peuvent par exemple comprendre un cœur de processeur ou CPU (de l'anglais « Central Processing Unit »).

Il est en outre proposé un système de surveillance de la qualité d'un canal de communication supporté par un dispositif de transmission de signaux électriques entre deux éléments mobiles l'un par rapport à l'autre formant un contact glissant. Ce système comprend :

- un dispositif de surveillance tel que décrit ci-dessus,
- des moyens pour appliquer le signal électrique continu, par exemple un fil électrique relié d'une part au dispositif de surveillance, et d'autre part à cet élément de dispositif de transmission,
- des moyens de mesure aptes à mesurer des valeurs de signaux électriques sur l'autre des éléments du dispositif de transmission, par exemple un voltmètre et/ou un ampèremètre électriquement raccordé à cet autre des éléments du dispositif de transmission.

L'invention vise également l'utilisation d'un dispositif de surveillance décrit ci-dessus pour surveiller la qualité d'un canal de communication supporté par un joint tournant, ou plus généralement une machine électrique tournante. Il est ainsi possible d'effectuer un diagnostic sans ouvrir le boitier de la machine électrique tournante.

La machine électrique tournante peut être un STS d'une éolienne.

Le dispositif de transmission de signaux électriques peut ainsi comprendre un STS, et notamment un dispositif de baguier, par exemple un système de bague fils, bague balai ou autre.

L'invention sera mieux comprise en référence aux figures, lesquelles illustrent des modes de réalisation donnés à titre d'exemple et non limitatifs.

La figure 1 montre schématiquement un exemple d'éolienne intégrant un STS.

La figure 2 montre un exemple de dispositif de transmission de signaux électriques intégrés dans un STS.

La figure 3 illustre schématiquement une opération de surveillance de la qualité d'un canal de communication, utilisant un système de surveillance selon un mode de réalisation de l'invention.

La figure 4 est un logigramme d'un exemple de procédé selon un mode de réalisation de l'invention.

La figure 5 est un graphique obtenu lors d'une phase préalable avec en abscisse une valeur de paramètre de variance, et en ordonnée un taux de perte de trame mesurée lors de cette phase préalable de détermination de seuil, lors de l'application d'un ensemble de procédé selon un mode de réalisation de l'invention.

La figure 6 est un graphique pour lequel chaque point représente une valeur de tension mesurée lors de l'application d'un exemple de procédé selon un mode de réalisation de l'invention.

La figure 7 est un graphique avec en abscisse des valeurs de fréquences, et en ordonnée des valeurs d'amplitude obtenues en appliquant une décomposition aux valeurs de tension mesurées de la figure 6.

Des références identiques peuvent désigner des éléments identiques ou similaires, dans leur forme ou leur fonction, d'une figure à l'autre.

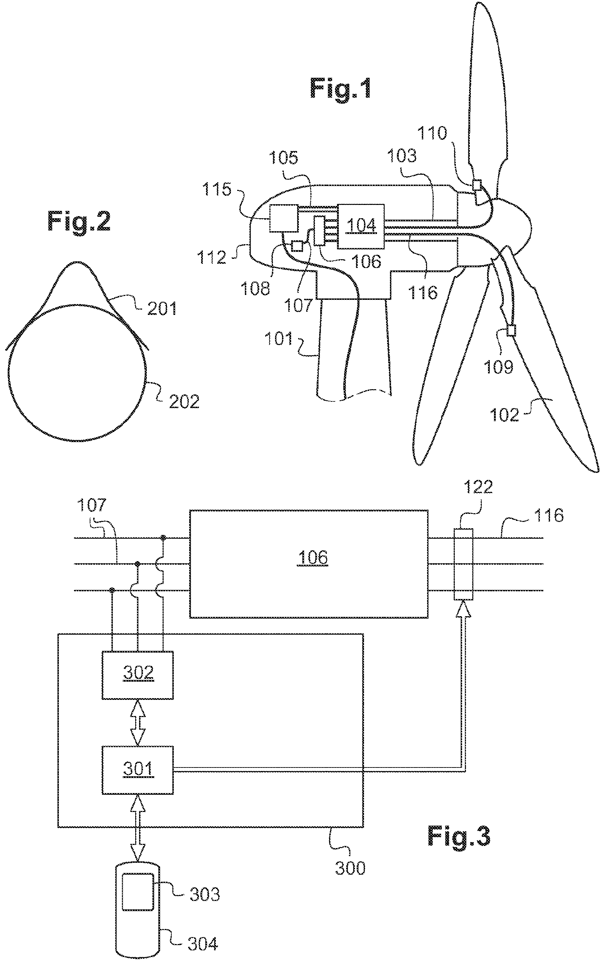

En référence à la figure 1, une éolienne 100 comprend un mât 101, une nacelle 112 et des pâles 102 solidarisées à un arbre dit lent 103.

Un multiplicateur 104 permet de convertir le mouvement de rotation de l'arbre lent 103 en un mouvement plus rapide d'un arbre dit rapide 105.

Un générateur 115 permet de générer du courant à partir du mouvement de cet arbre rapide 105.

L'éolienne est équipée de capteurs, par exemple des capteurs de vibration ou autre, dont un seul 109 est représenté ici à des fins de clarté. Un processeur 108 reçoit des signaux issus de ces capteurs et commande en conséquence des actionneurs, par exemple un moteur 110 pour modifier l'orientation des pales 102. Les capteurs 109 et les actionneurs 110 sont ainsi solidaires des pales, tandis que le processeur reste fixe.

Des câbles 116 raccordés aux capteurs ou aux actionneurs sont installés à l'intérieur de l'arbre lent 103.

Un STS 106 est situé à proximité du multiplicateur 104 et couplé mécaniquement à l'arbre lent 103. Le STS 106 comprend un boîtier à l'intérieur duquel sont installés un ensemble de systèmes bague frotteur (non représentés sur la figure 1). Les bagues sont solidaires des pales et de l'arbre lent 103, et chaque bague est raccordée à un câble respectif 116 installé à l'intérieur de l'arbre lent 103 et relié par ailleurs à un capteur, un actionneur, ou un autre dispositif solidaire des pales.

Contre chaque bague frotte un frotteur fixe, par exemple un fil.

La figure 2 montre un exemple de système bague fil. Un fil 201 vient frotter contre la bague 202 lorsque cette bague est entraînée en mouvement par l'arbre lent.

Ce fil 201 est par ailleurs raccordé à un câble de sortie référencé 107 sur la figure 1. Sur la figure 1, un seul câble 107 est représenté, mais on comprendra que le STS peut intégrer un nombre relativement élevé de baguiers et donc de câbles 107, par exemple 3, 4, 7, ou davantage voies dédiées au transfert de signal, selon le ou les protocole(s) supporté(s). Ces câbles 107 permettent de raccorder le STS 106 à un processeur 108. Le processeur 108 est agencé pour piloter le moteur 110 à partir des informations issues des capteurs 109.

Des câbles supplémentaire et non représentés permettent de transférer de la puissance entre le STS 106 et le moteur 110 d'orientation des pâles.

L'état de surface des contacts glissant, du type de celui représenté sur la figure 2, est susceptible de s'altérer avec le temps, de sorte qu'il est judicieux de surveiller la qualité du canal de communication ainsi supporté par ce contact glissant.

En référence à la figure 3, un système de surveillance 300 intègre un dispositif de surveillance du type 301, ici un processeur et un dispositif de voltmètre 302. Ce système 300 est en communication, filaire ou sans fil, avec un terminal utilisateur 304 intégrant des moyens d'affichage 303, par exemple un écran.

Le processeur 301 est en outre raccordé à chacune des bagues du STS 106, via des collecteurs à mercure schématiquement représentés et référencés 122, ou via un autre dispositif adaptateur, par exemple un joint tournant ou plus généralement une machine électrique tournante.

Dans un mode de réalisation alternatif et non représenté, on peut prévoir de placer en série deux STS à tester, et de raccorder le dispositif de surveillance d'une part à l'entrée de l'un de ces STS et de l'autre à la sortie de l'autre de ces STS ; ce qui peut permettre d'éviter de prévoir un dispositif adaptateur du type collecteur à mercure.

Pour revenir à la figure 3, le dispositif de voltmètre 302 permet d'obtenir des valeurs de tensions mesurées pour chacun des câbles 107 du STS 106. Alternativement, on pourrait relier le voltmètre directement aux frotteurs du type de celui référencé 201 sur la figure 2.

Dans cet exemple, on applique un courant continu et on mesure une tension, mais l'invention n'est en rien limitée par la nature des signaux électriques appliqués et mesurés. On pourrait par exemple appliquer et mesurer un courant.

Le processeur 301 est agencé pour commander l'application d'un signal électrique continu à chacune des bagues du STS 106. Le voltmètre 302 permet de relever des valeurs de tension mesurées sur le frotteur glissant contre cette bague, et ces valeurs V(n) mesurées au cours du temps sont transmises au processeur 301. Le processeur 301 analyse ces valeurs, et, selon le résultat de l'analyse, élabore un message transmis vers le terminal 303 afin que soit affiché un rapport de surveillance quant au STS 106.

On pourra relever que ce système de surveillance 300 peut être mis en œuvre sans qu'il soit nécessaire de démonter le STS 106, de sorte que cette opération de surveillance peut être plus facile à mener qu'une opération de maintenance de chacun des contacts glissants.

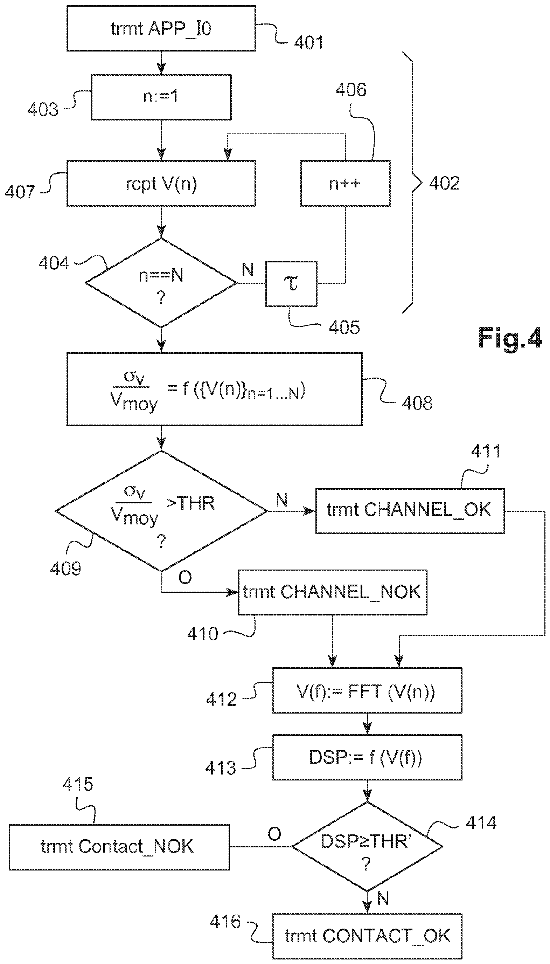

La figure 4 illustre un exemple de procédé mis en œuvre par le processeur 301.

Ce processeur transmet tout d'abord un message APP_I0 afin d'appliquer un courant continu, d'amplitude égale à 50 mA par exemple, à une bague donnée du STS au cours d'une étape 401.

Puis une boucle 402 est mise en place afin de recueillir un ensemble de valeurs de tension mesurées par le voltmètre. Cette boucle échantillonnée n, comprend des étapes d'initialisation 403, de test de sortie 404, d'attente 405 et d'incrémentation 406. A chaque boucle est reçue une valeur de tension V(n) au cours d'une étape 407.

Lorsqu'un nombre N de valeurs de tensions ont ainsi été reçues, on estime une valeur d'un paramètre de variance $\dfrac{\sigma_V}{V_{moy}}$ au cours d'une étape 408. Plus précisément, on détermine la variance $\sigma_V$ de la tension à partir des N valeurs mesurées et l'on divise cette valeur de variance $\sigma_V$ par une valeur de tension moyenne $V_{moy}$.

Puis au cours d'une étape 409, on compare cette valeur de paramètre de variance $\dfrac{\sigma_V}{V_{moy}}$ un seuil THR.

Ce seuil THR a été déterminé lors d'une phase d'analyse préalable. Au cours de cette phase d'analyse préalable, un analyseur de protocole permet d'établir une correspondance entre le transfert de trames selon un protocole donné et ce paramètre de variance. L'analyseur émet des trames conformément au protocole donné, et permet de déterminer un nombre de trames perdues au passage du contact glissant.

Lors de cette phase d'analyse préalable, on teste différents contacts glissants présentant chacun une valeur de paramètre de variance $\dfrac{\sigma_V}{V_{moy}}$ différentes.

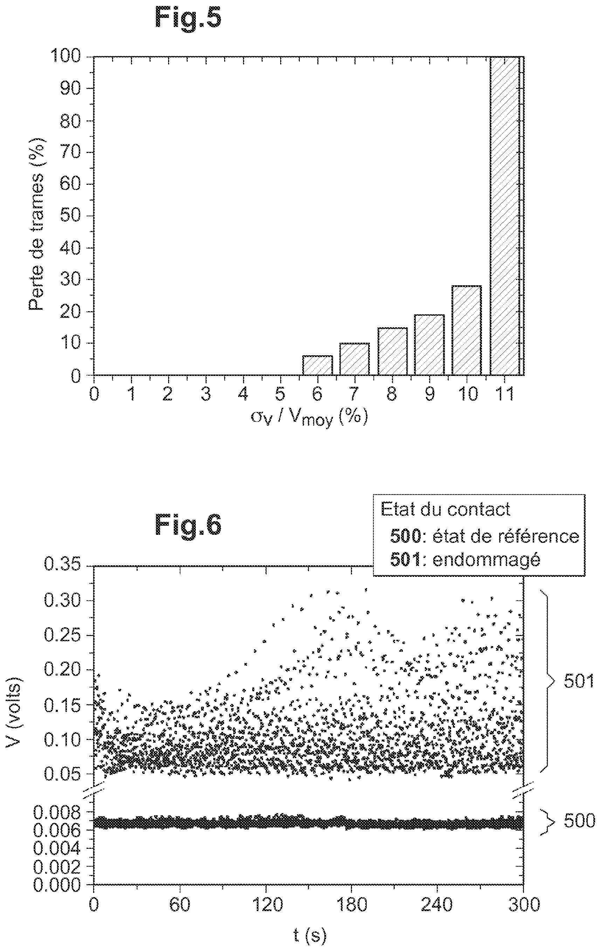

Par exemple, comme représenté sur la figure 5, on teste un premier contact glissant ayant une valeur de paramètre de variance $\dfrac{\sigma_V}{V_{moy}}$ égale à 1%, un deuxième contact glissant ayant une valeur de paramètre de variance $\dfrac{\sigma_V}{V_{moy}}$ égale à 2%, etc. jusqu'à un onzième contact glissant pour lequel la valeur de paramètre de variance de paramètre de variance $\dfrac{\sigma_V}{V_{moy}}$ est égale à 11%.

Lors de cette phase de test préalable, la vitesse de rotation est choisie égale à une vitesse caractéristique du fonctionnement du système pour chacun des contacts glissant, par exemple 20 tours par minute.

La figure 5 montre que le taux de perte de trames est clairement lié à la valeur de paramètre de variance. Ainsi, le protocole testé, ici un protocole Ethernet avec un débit choisi dans une plage entre 10 Mb/s et 100 Mb/s, est tout à fait robuste lorsque cette valeur de paramètre de variance $\dfrac{\sigma_V}{V_{moy}}$ est inférieure ou égale à 5%. En revanche, pour des valeurs de paramètre de variance $\dfrac{\sigma_V}{V_{moy}}$ entre 6 et 10%, le taux de perte de trame varie entre 5 et 30 % environ. Enfin, pour une valeur de paramètre de variance de 11% ou davantage, on peut présumer que toutes les trames seront perdues.

On peut ainsi choisir pour le protocole Ethernet avec cette valeur de débit une valeur de seuil THR du paramètre de variance $\dfrac{\sigma_V}{V_{moy}}$, par exemple égale à 5%, car cette phase d'analyse préalable a permis de montrer que, pour une vitesse de rotation de 20 tours par minute, le taux de perte de trames était acceptable lorsque cette valeur de paramètre de variance $\dfrac{\sigma_V}{V_{moy}}$ était inférieure ou égale à 5%.

Pour un autre protocole, le seul pourra avoir une valeur différente. Par exemple, dans le cas d'un bus CAN avec un débit de 1 Mb/s, il n'y a aucune perte de trame tant que la valeur de paramètre de variance $\dfrac{\sigma_V}{V_{moy}}$ est inférieure ou égale à 10% : on pourra donc choisir un seuil de 10%.

Dans ces exemples, la phase de tests a été effectuée avec une vitesse de rotation de 20 tours par minute. On pourra bien entendu prévoir une autre phase de tests, avec d'autres vitesses de rotation, afin de caractériser au mieux la qualité du canal de communication.

Pour revenir à la figure 4, si le test 409 montre que la valeur du paramètre de variance déterminée à l'étape 408 est supérieure à 5%, alors le processeur élabore un message CHANNEL_NOK pour indiquer à l'opérateur que le canal de communication a vraisemblablement une qualité insuffisante. Cette transmission est effectuée au cours d'une étape 410.

Si au contraire le test 409 est négatif, alors le processeur élabore un message CHANNEL_OK au cours d'une étape 411 pour indiquer à l'opérateur que le canal de communication a une qualité satisfaisante.

Le procédé illustré par la figure 4 comporte en outre des étapes de suivi d'un autre indicateur, pour caractériser cette fois l'état du contact glissant. Dans cet exemple, on prévoit ainsi une étape 412 de décomposition dans le domaine fréquentiel des valeurs de tension mesurées, par exemple en appliquant une transformée de Fourier rapide, puis on détermine au cours d'une étape 413 une valeur de densité spectrale de puissance DSP.

Cette densité spectrale de puissance est comparée à un seuil de densité spectrale de puissance THR' au cours d'une étape 414. S'il s'avère que la valeur de densité spectrale de puissance, typiquement représentative du bruit de tension, est supérieure à ce seuil THR', alors le processeur élabore un message indiquant que la qualité du contact glissant est non satisfaisante, et transmet ce message au cours d'une étape 415 vers un terminal de l'opérateur.

Si au contraire le teste 414 est négatif, alors c'est un message indiquant que le contact est dans un état suffisamment satisfaisant qui est transmis vers le terminal de l'opérateur, au cours d'une étape 416.

L'opérateur reçoit ainsi une information quant au canal de communication et une information quant à l'état de surface. Si par exemple il s'avère que l'état de surface est satisfaisant, mais que le canal de transmission a une qualité insuffisante, l'opérateur peut décider d'appliquer au autre protocole, ayant par exemple un débit moindre ou un code correcteur d'erreur plus robuste, pour le transfert des données entre les dispositifs montés sur les pales 109, 110 et le processeur 108.

La figure 6 est un graphique avec en abscisse le temps, en secondes, et en ordonnée des valeurs de tension, en Volts, chaque point de ce graphique correspondant à un point de mesure. L'ensemble des points 500 a été obtenu pour un système de type bague frotteur avec un contact neuf. Le nuage de points 501 a été obtenu pour ce même système dans un état dégradé. Dans ce cas, la vitesse de rotation est de 46 tours par minutes, ce qui correspond à une fréquence de 0,77 Hz environ. La tension a été mesurée sur une durée de 300 secondes.

Comme on peut le constater, les valeurs de tension reçues varient bien davantage lorsque le contact glissant est dans un état dégradé, que lorsque le contact glissant est neuf. Ainsi, dans cet exemple, la variance $\sigma_V$ obtenue à partir du nuage de points 501 est de 0,04992, alors que la variance $\sigma_V$ obtenue à partir de l'ensemble de points 500 est de 0,00056.

La valeur du paramètre représentatif de la variance $\dfrac{\sigma_V}{V_{moy}}$ pour le nuage de points 501 est de 47,8 %, tandis que cette valeur est de 7,9% dans le cas du contact dans un état neuf.

Il ressort en outre que les tensions sont bien plus élevées lorsque le contact est dégradé que lorsque le contact est neuf. La tension moyenne suite à l'application d'un courant continu de 50 milliampères est ainsi de 0 ,00708 volts dans le cas du contact neuf, alors que dans le cas du contact dégradé, cette tension moyenne est de 0,10448 volts. On peut donc tout à fait prévoir de comparer ces indicateurs temporels, c'est-à-dire la valeur moyenne de la tension, et/ou la variance à des seuils respectifs afin de disposer de davantage d'information quant à la qualité du canal de transmission, même si ces étapes ne sont pas représentées dans le logigramme de la figure 4, ce logigramme restant relativement peu détaillé à des fins de clarté.

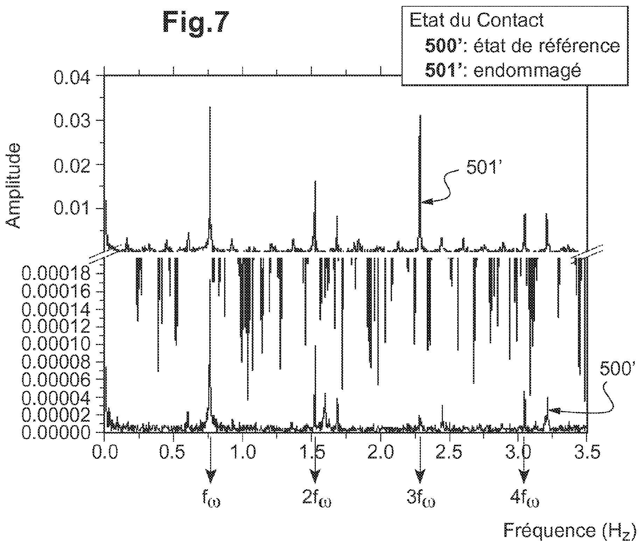

En référence à la figure 7, sont représentées en abscisse des valeurs de fréquence, en Hertz, et en ordonnées des valeurs d'amplitude, ces valeurs d'amplitude ayant été obtenues par décomposition en fréquence des ensembles de points 500, 501.

Le graphe 500' a ainsi été obtenu en appliquant une transformée de Fourier rapide aux tensions correspondant à l'ensemble de points 500, tandis que le graphe 501' a été obtenu en appliquant une transformée de Fourier rapide aux tensions correspondant au nuage de points 501.

Comme on peut le constater, l'amplitude du graphe 501' est bien plus élevée que celle du graphe 500'. D'autres indicateurs fréquentiels comme l'amplitude des différentes harmoniques peuvent également permettre de caractériser l'état du contact.

Les tableaux ci-dessous donnent des valeurs ainsi obtenues pour différents indicateurs fréquentiels, ici des valeurs d'amplitudes d'harmoniques et des valeurs de densité spectrale de puissance moyenne, et un indicateur d'entropie, ainsi que leur ratio.

| Système | Amplitude 1f | Amplitude 2f | Amplitude 3f | Amplitude 4f |
|---|---|---|---|---|
| Contact neuf | 0,000176 | 0,000100 | 0,000021 | 0,000048 |
| Dégradé | 0,03306 | 0,01636 | 0,03138 | 0,00915 |
| Rapport des indicateurs | 188 | 163 | 1494 | 191 |

| Système | DSP (V²/Hz) | Taux d'entropie (Hz) |
|---|---|---|
| Contact neuf | $3,51 \cdot 10^{-9}$ | 39,8 |
| Dégradé | $4,26 \cdot 10^{-5}$ | 18,6 |
| Rapport des indicateurs | 16985 | 0,47 |

On constate que les indicateurs fréquentiels augmentent sensiblement lorsque le contact est dégradé. Notamment, la densité spectrale de puissance moyenne du bruit de tension est de quatre ordres de grandeur différente d'un contact à l'autre.

La première harmonique, dite fondamentale, correspond à la vitesse de rotation du contact glissant. Les spectres ainsi obtenus sont sensibles à l'état mécanique du contact glissant. Le spectre 500' comporte des harmoniques de la composante fondamentale de la rotation de la bague, les harmoniques d'ordre supérieur à 1 ayant des amplitudes plus faibles que l'amplitude correspondant à la fréquence fondamentale. Ces harmoniques sont dues aux vibrations de la bague engendrée du fait de la rotation. En cas de défaut de type balourd, ou autre, le spectre est susceptible d'être enrichi, c'est-à-dire que les amplitudes absolues et relatives de la fréquence principale de rotation sont susceptibles d'augmenter de façon significative. On pourra ainsi prévoir des tests consistant à comparer les différentes valeurs d'amplitude d'harmoniques entre elles afin de mieux détecter ses défauts.

On pourra aussi prévoir un affichage du spectre obtenu, afin qu'un technicien, lors de l'installation ou d'une opération de maintenance, puisse corriger les défauts en se basant sur cette représentation du spectre.

Concernant l'indicateur d'entropie, le paramètre d'entropie, ici un taux d'entropie TE, est obtenu à partir de la variance $\sigma_V$ et à partir de la densité spectrale de puissance DSP en appliquant la formule suivante :

$$TE = \frac{1}{\pi} \cdot \frac{\sigma_V^2}{DSP}$$

Cette formule permet d'estimer une valeur de paramètre représentatif de l'entropie relativement facilement et rapidement.

**Revendications**

1. Procédé de surveillance de la qualité d'un canal de communication impliquant une couche physique et des couches protocolaires, ledit canal de communication étant supporté par un dispositif de transmission de signaux électriques entre deux éléments mobiles l'un par rapport à l'autre formant un contact glissant, le procédé comprenant :

   commander (401) l'application d'un signal électrique continu à l'un des éléments du dispositif de transmission, recevoir (402) une pluralité de valeurs V(n) de signaux électriques mesurées sur l'autre des éléments du dispositif de transmission,

estimer (408) à partir de ladite pluralité de valeurs mesurées une valeur de paramètre de variance $\left(\dfrac{\sigma_V}{V_{moy}}\right)$,

comparer (409) la valeur de paramètre de variance à un seuil THR choisi en fonction d'au moins un paramètre de protocole du cana de communication,
en fonction du résultat de la comparaison, générer un signal CHANNEL_OK, CHANNEL_NOK représentatif de la qualité du canal de communication, et
prendre une décision quant à savoir si ledit protocole de communication pourra être supporté ou non par ce contact glissant.

2. Procédé selon la revendication 1, dans lequel le seuil THR est choisi, en fonction dudit au moins un paramètre de protocole du canal de communication, de façon à correspondre à un taux de perte de trames prédéterminé.

3. Procédé selon l'une quelconque des revendications 1 ou 2, comprenant en outre :

estimer à partir de la pluralité de valeurs mesurées, et avantageusement à partir de la valeur de paramètres de variance, une valeur de paramètre d'entropie, et,
estimer une valeur de paramètre d'état de surface du contact en fonction de cette valeur de paramètre d'entropie.

4. Procédé selon l'une quelconque des revendications 1 à 3, dans lequel à chaque valeur de signal électrique reçue V (n) est associée une valeur d'instant de réception,
**caractérisé en ce que** le procédé comprend en outre une étape de décomposition (412) dans le domaine fréquentiel des valeurs reçues.

5. Procédé selon la revendication 4, comprenant en outre
déterminer au moins une valeur de paramètre d'amplitude d'harmonique correspondant à au moins une fréquence d'harmonique respective, et
estimer un état du dispositif de transmission à partir de ladite valeur de paramètre d'amplitude d'harmonique

6. Procédé selon la revendication 5, dans lequel on compare ladite valeur de paramètre d'amplitude à un seuil d'amplitude prédéterminé.

7. Procédé selon l'une quelconque des revendications 5 à 6, comprenant
déterminer une pluralité de valeurs de paramètre d'amplitude d'harmonique, en particulier une valeur d'amplitude pour l'harmonique de premier rang, et une ou plusieurs valeurs d'harmonique pour les harmoniques de rangs supérieurs,
comparer entre elles les valeurs de ladite pluralité de valeurs de paramètre d'amplitude d'harmonique afin de détecter des défauts du dispositif de transmission.

8. Procédé selon l'une quelconque des revendications 1 à 7, comprenant en outre
estimer (413) une valeur d'un paramètre de densité spectrale de puissance, DSP, et comparer (414) cette valeur de paramètre de densité spectrale de puissance à un seuil de densité spectrale de puissance THR'.

9. Procédé selon l'une quelconque des revendications 1 à 8, dans lequel le canal de communication est supporté par une machine électrique tournante (106).

10. Procédé selon la revendication 9, dans lequel la machine électrique tournante comprend un système de transmission de signaux (106) d'une éolienne.

11. Dispositif de surveillance (301) de la qualité d'un canal de communication impliquant une couche physique et des couches protocolaires, ledit canal de communication étant supporté par un dispositif de transmission (106) de signaux électrique entre deux éléments mobiles l'un par rapport à l'autre formant un contact glissant, le dispositif comprenant :

des moyens de transmission pour commander l'application d'un signal électrique continu à l'un des éléments du dispositif de transmission,
des moyens de réception pour recevoir une pluralité de valeurs de signaux électriques mesurées sur l'autre des éléments du dispositif de transmission, et

des moyens de traitement agencés pour estimer à partir de ladite pluralité de valeurs mesurées une valeur de paramètre de variance, pour comparer la valeur de paramètre de variance à un seuil choisi en fonction d'au moins un paramètre de protocole du canal de communication, et pour générer en fonction du résultat de la comparaison un signal représentatif de la qualité du canal de communication pour prendre une décision quant à savoir si ledit protocole de communication pourra être supporté ou non par ce contact glissant.

**Patentansprüche**

1. Verfahren zur Überwachung der Qualität eines Kommunikationskanals, der eine physische Schicht und protokollarische Schichten einbezieht, wobei der Kommunikationskanal durch eine Übertragungsvorrichtung von elektrischen Signalen zwischen zwei zueinander beweglichen Elementen, die einen Gleitkontakt bilden, unterstützt wird, wobei das Verfahren umfasst:

   Steuern (401) der Anwendung eines elektrischen Dauersignals auf das eine der Elemente der Übertragungsvorrichtung,
   Empfangen (402) einer Vielzahl von elektrischen Signalwerten V(n), die am anderen der Elemente der Übertragungsvorrichtung gemessen werden,

   Schätzen (408) aus der Vielzahl von gemessenen Werten eines $\left(\dfrac{\sigma_V}{V_{moy}}\right)$, Varianzparameterwerts

   Vergleichen (409) des Varianzparameterwerts mit einem Schwellenwert THR, der in Abhängigkeit von mindestens einem Protokollparameter des Kommunikationskanals ausgewählt wird,
   in Abhängigkeit von dem Ergebnis des Vergleichs, Generieren eines für die Qualität des Kommunikationskanals repräsentativen Signals CHANNEL_OK, CHANNEL_NOK, und
   Treffen der Entscheidung, um zu wissen, ob das Kommunikationsprotokoll durch diesen Gleitkontakt unterstützt werden kann oder nicht.

2. Verfahren nach Anspruch 1, wobei der Schwellenwert THR in Abhängigkeit von dem mindestens einen Protokollparameter des Kommunikationskanals ausgewählt wird, um einer vorbestimmten Verlustrate von Rastern zu entsprechen.

3. Verfahren nach einem der Ansprüche 1 oder 2, weiter umfassend:

   Schätzen aus der Vielzahl von gemessenen Werten, und vorzugsweise aus dem Varianzparameterwert, eines Entropieparameterwerts, und
   Schätzen eines Parameterwerts einer Oberflächenbeschaffenheit des Kontakts in Abhängigkeit von diesem Entropieparameterwert.

4. Verfahren nach einem der Ansprüche 1 bis 3, wobei jedem empfangenen elektrischen Signalwert V(n) ein Empfangsmomentwert zugewiesen ist,
   **dadurch gekennzeichnet, dass** das Verfahren weiter einen Aufteilungsschritt (412) im Frequenzbereich des empfangenen Werte umfasst.

5. Verfahren nach Anspruch 4, weiter umfassend
   Bestimmen mindestens eines Parameterwerts einer Oberwellenamplitude, der mindestens einer jeweiligen Oberwellenfrequenz entspricht, und
   Schätzen eines Zustands der Übertragungsvorrichtung aus dem Parameterwert einer Oberwellenamplitude.

6. Verfahren nach Anspruch 5, wobei der Amplitudenparameterwert mit einem vorbestimmten Amplitudenschwellenwert verglichen wird.

7. Verfahren nach einem der Ansprüche 5 bis 6, umfassend
   Bestimmen einer Vielzahl von Parameterwerten einer Oberwellenamplitude, insbesondere eines Amplitudenwerts für die Oberwelle ersten Ranges, und eines oder mehrerer Oberwellenwerte für die Oberwellen höherer Ränge,
   Vergleichen untereinander der Werte der Vielzahl von Parameterwerten einer Oberwellenamplitude, um Fehler der Übertragungsvorrichtung zu detektieren.

8. Verfahren nach einem der Ansprüche 1 bis 7, weiter umfassend
Schätzen (413) eines Werts eines Parameters einer spektralen Leistungsdichte, DSP, und
Vergleichen (414) dieses Parameterwerts einer spektralen Leistungsdichte mit einem spektralen Leistungsdichteschwellenwert THR'.

9. Verfahren nach einem der Ansprüche 1 bis 8, wobei der Kommunikationskanal durch eine elektrische Rotationsmaschine (106) unterstützt wird.

10. Verfahren nach Anspruch 9, wobei die elektrische Rotationsmaschine ein Signalübertragungssystem (106) eines Windrades umfasst.

11. Vorrichtung zur Überwachung (301) der Qualität eines Kommunikationskanals, der eine physische Schicht und protokollarische Schichten einbezieht, wobei der Kommunikationskanal durch eine Übertragungsvorrichtung (106) von elektrischen Signalen zwischen zwei zueinander beweglichen Elementen, die einen Gleitkontakt bilden, unterstützt wird, wobei die Vorrichtung umfasst:

Übertragungsmittel zum Steuern der Anwendung eines elektrischen Dauersignals auf das eine der Elemente der Übertragungsvorrichtung,
Empfangsmittel zum Empfangen einer Vielzahl von elektrischen Signalwerten, die am anderen der Elemente der Übertragungsvorrichtung gemessen werden,
Verarbeitungsmittel, die angeordnet sind, um aus der Vielzahl von gemessenen Werten einen Varianzparameterwert zu schätzen, um den Varianzparameterwert mit einem Schwellenwert, der in Abhängigkeit von mindestens einem Protokollparameter des Kommunikationskanals ausgewählt wird, zu vergleichen, und um in Abhängigkeit von dem Ergebnis des Vergleichs, ein für die Qualität des Kommunikationskanals repräsentatives Signal zu generieren, um eine Entscheidung zu treffen, um zu wissen, ob das Kommunikationsprotokoll durch diesen Gleitkontakt unterstützt werden kann oder nicht.

## Claims

1. A method for monitoring the quality of a communication channel involving a physical layer and protocol layers, said communication channel being supported by a device for transmitting electrical signals between two mutually mobile elements forming a sliding contact, the method comprising:

controlling (401) the application of a DC electrical signal to one of the elements of the transmission device,
receiving (402) a plurality of electrical signal values V(n) measured on the other of the elements of the transmission device,

estimating (408), from said plurality of measured values, a variance parameter value $\left(\dfrac{\sigma_V}{V_{moy}}\right)$,

comparing (409) the variance parameter value to a threshold THR chosen as a function of at least one protocol parameter of the communication channel,
as a function of the result of the comparison, generating a signal (CHANNEL_OK, CHANNEL_NOK) representative of the quality of the communication channel, and
taking a decision as to whether said communication protocol will be able to be supported or not by this sliding contact.

2. The method as claimed in claim 1, in which the threshold THR is chosen as a function of said at least one protocol parameter of the communication channel, so as to correspond to a predetermined frame loss rate.

3. The method as claimed in either one of claims 1 and 2, further comprising:

estimating, from the plurality of measured values, and advantageously from the variance parameter value, an entropy parameter value, and,
estimating a surface state parameter value of the contact as a function of this entropy parameter value.

4. The method as claimed in any one of claims 1 to 3, in which each received electrical signal value V(n) has an associated reception instant value,
**characterized in that** the method further comprises a step of decomposition (412) in the frequency domain of the received values.

5. The method as claimed in claim 4, further comprising
determining at least one harmonic amplitude parameter value corresponding to at least one respective harmonic frequency, and
estimating a state of the transmission device from said harmonic amplitude parameter value.

6. The method as claimed in claim 5, in which said amplitude parameter value is compared to a predetermined amplitude threshold.

7. The method as claimed in any one of claims 5 to 6, comprising
determining a plurality of harmonic amplitude parameter values, in particular an amplitude value for the harmonic of first rank, and one or more harmonic values for the harmonics of higher ranks,
comparing, between them, the values of said plurality of harmonic amplitude parameter values in order to detect transmission device faults.

8. The method as claimed in any one of claims 1 to 7, further comprising
estimating (413) a value of a power spectral density parameter, PSD, and
comparing (414) this power spectral density parameter value to a power spectral density threshold THR'.

9. The method as claimed in any one of claims 1 to 8, in which the communication channel is supported by a rotating electrical machine (106).

10. The method as claimed in claim 9, in which the rotating electrical machine comprises a signal transmission system (106) of a wind turbine.

11. A device (301) for monitoring the quality of a communication channel involving a physical layer and protocol layers, said communication channel being supported by a device (106) for transmitting electrical signals between two mutually mobile elements forming a sliding contact, the device comprising:

transmission means for controlling the application of a DC electrical signal to one of the elements of the transmission device,
reception means for receiving a plurality of electrical signal values measured on the other of the elements of the transmission device, and
processing means arranged to estimate, from said plurality of measured values, a variance parameter value, to compare the variance parameter value to a threshold chosen as a function of at least one protocol parameter of the communication channel, and to generate, as a function of the result of the comparison, a signal representative of the quality of the communication channel to take a decision as to whether said communication protocol will be able to be supported or not by this sliding contact.

Fig.1

Fig.2

Fig.3

Fig.4

## Fig.5

## Fig.6

Etat du contact
**500**: état de référence
**501**: endommagé

Fig.7

Etat du Contact
**500'**: état de référence
**501'**: endommagé

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9608944

- US 20110309943 A